# EUROPEAN PATENT APPLICATION

(11) **EP 4 803 843 A1**
(43) Date of publication of application: **09.09.2026**
(21) Application number: 26162117.1
(22) Date of filing: 03.03.2026
(51) Int. Cl.: F28D 20/02, F28F 9/00, F28F 9/007

(54) **HEAT STORAGE DEVICE**

(30) Priority: 05.03.2025 JP 2025034297
(71) Applicant: SHINKO ELECTRIC INDUSTRIES CO., LTD., Nagano-shi, Nagano 381-2287 (JP)
(72) Inventor: WATANABE, Takuya, NAGANO, 381-2287 (JP); HORIUCHI, Michio, NAGANO, 387-0024 (JP); SHIMIZU, Yuichiro, NAGANO, 381-2287 (JP); NAGAI, Koji, NAGANO, 381-2287 (JP)
(74) Representative: Regimbeau

(57) **Abstract**

A heat storage device includes an insulated container, and one or more latent heat storage members having a plate shape and accommodated inside the insulated container. Each latent heat storage member of the one or more latent heat storage members includes a ceramic part having a closed space formed therein, and a latent heat storage part provided inside the closed space. The insulated container includes a space in which the one or more latent heat storage members is located, a first vent and a second vent communicating with the space, and a support member configured to support the one or more latent heat storage members and enable a heat transfer medium to flow between the first vent and the second vent.

## Description

### FIELD

Certain aspects of the embodiments discussed herein are related to heat storage devices.

### BACKGROUND

There is a heat storage device having a container filled with a spherical latent heat storage member having a diameter of several tens of micrometers.

Examples of related art include Japanese Laid-Open Patent Publication No. 2023-172734, Nicolas A. DeLovato et al., "Thermomechanical modeling of counterflow packed-bed particle-to-sCO2 heat exchangers", AIP Conf. Proc. 2445, 030004 (2022), M. Mofijur et al., "Phase Change Materials (PCM) for Solar Energy Usages and Storage", Energies 2019, 12, 3167, T. Nomura et al., "Microencapsulation of Metal-based Phase Change Material for High-temperature Thermal Energy Storage", Sci. Rep. 2015, 5, 9117, and K. W. Desmond, E. R. Weeks, "Influence of particle size distribution on random close packing of spheres", Phys. Rev. E 2014, 90, 022204, for example.

In recent years, there are increased demands to improve an energy density of a heat storage device.

### SUMMARY

It is an object in one aspect of the embodiments of the present disclosure to provide a heat storage device capable of improving an energy density.

According to one aspect of the embodiments of the present disclosure, a heat storage device includes an insulated container; and one or more latent heat storage members having a plate shape and accommodated inside the insulated container, wherein each latent heat storage member of the one or more latent heat storage members includes a ceramic part having a closed space formed therein; and a latent heat storage part provided inside the closed space, and the insulated container includes a space in which the one or more latent heat storage members is located; a first vent and a second vent communicating with the space; and a support member configured to support the one or more latent heat storage members and enable a heat transfer medium to flow between the first vent and the second vent.

The object and advantages of the embodiments will be realized and attained by means of the elements and combinations particularly pointed out in the claims.

It is to be understood that both the foregoing general description and the following detailed description are exemplary and explanatory and not restrictive of the invention, as claimed.

### BRIEF DESCRIPTION OF THE DRAWINGS

FIG. 1 is a perspective view illustrating an example of a heat storage device according to a first embodiment;
FIG. 2 is a perspective view illustrating examples of a housing and a latent heat storage part in the first embodiment;
FIG. 3 is a top view illustrating the examples of the housing and the latent heat storage part in the first embodiment;
FIG. 4 is a perspective view illustrating the example of the housing in the first embodiment;
FIG. 5 is a top view illustrating the example of the housing in the first embodiment;
FIG. 6 is a cross sectional view illustrating the example of the heat storage device according to the first embodiment;
FIG. 7 is a perspective view illustrating an example of a latent heat storage member;
FIG. 8 is a cross sectional view illustrating the example of the latent heat storage member;
FIG. 9 is a perspective view illustrating an example of a method for manufacturing the latent heat storage member;
FIG. 10 is a perspective view illustrating an example of the heat storage device according to a second embodiment;
FIG. 11 is a perspective view illustrating examples of the housing and the latent heat storage part in the second embodiment;
FIG. 12 is a top view illustrating a housing and a latent heat storage part in the second embodiment;
FIG. 13 is a perspective view illustrating the example of the housing in the second embodiment;
FIG. 14 is a top view illustrating the example of the housing in the second embodiment; and
FIG. 15 is a cross sectional view illustrating the example of the heat storage device according to the second embodiment.

### DESCRIPTION OF EMBODIMENTS

Hereinafter, embodiments will be described in detail with reference to the accompanying drawings. In the present specification and drawings, constituent elements or components having substantially the same functional configuration are designated by the same reference numerals, and a redundant description thereof may be omitted. In the following description, an XYZ orthogonal coordinate system is used, and when viewed from an arbitrary point, a +Z side may be referred to as upward, upper side, or above, and a -Z side may be referred to as a downward, lower side, or below. In addition, a surface on the lower side may be referred to as one surface or a lower surface, and a surface on the upper side may be referred to as the other surface or an upper surface. However, the coordinate system is defined for the sake of convenience of description, and does not limit the orientation of a heat storage device. The heat storage device can be used in an upside down state, or can be arranged at an arbitrary angle.

### <First Embodiment>

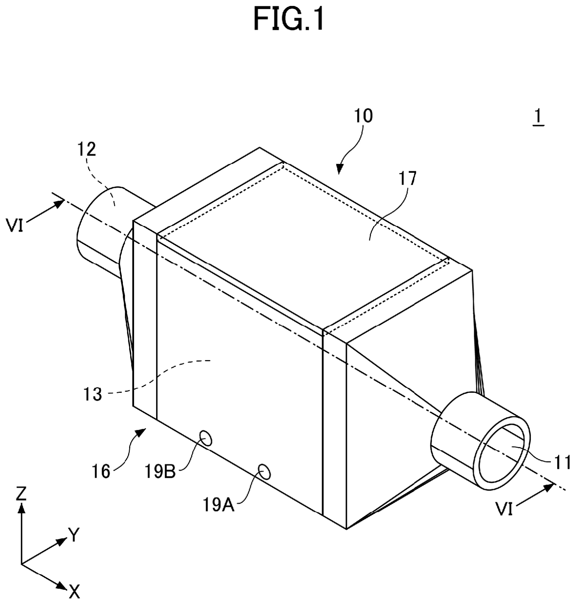

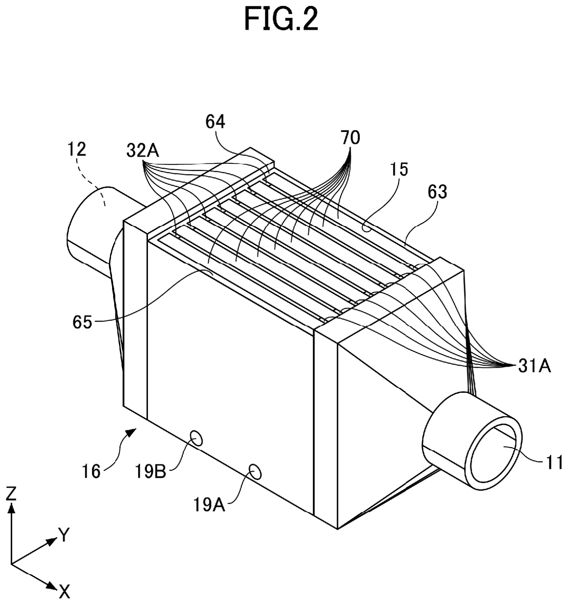

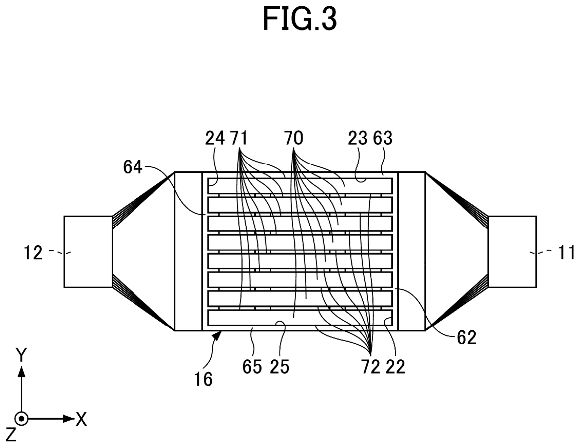

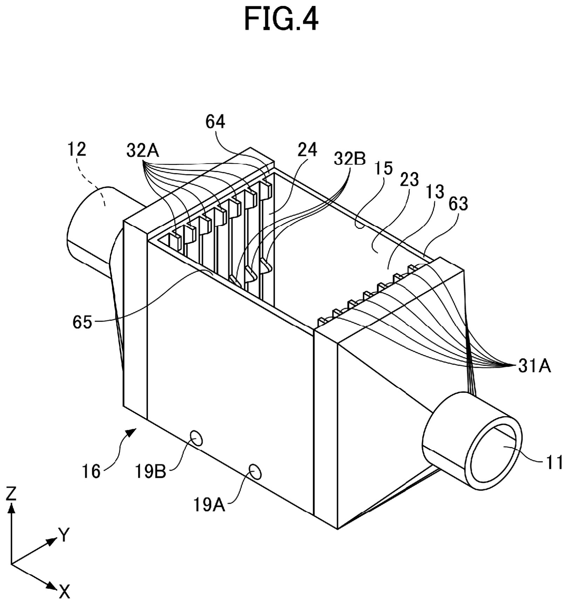

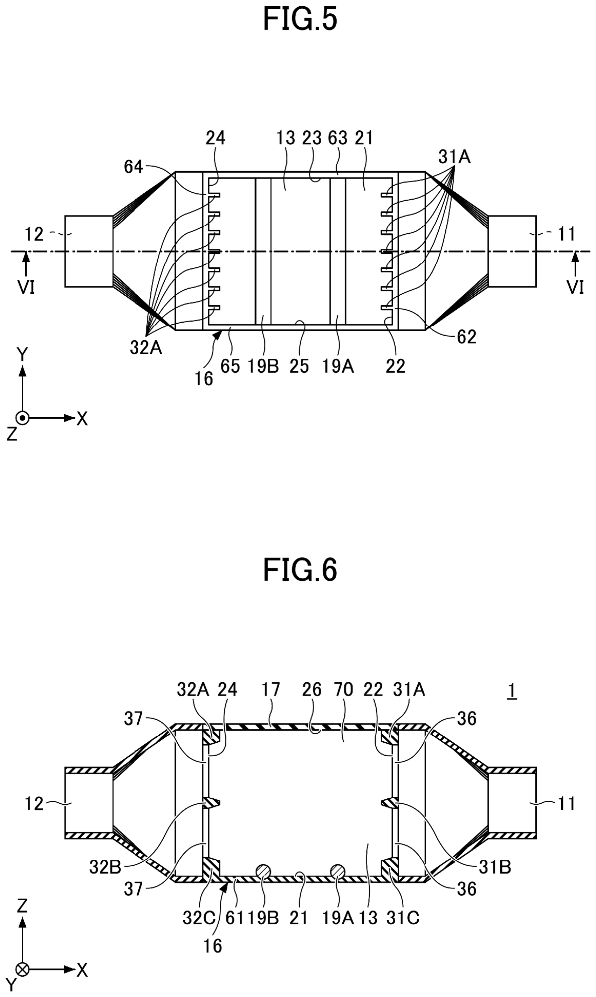

A first embodiment will be described. The first embodiment relates to the heat storage device. FIG. 1 is a perspective view illustrating an example of the heat storage device according to the first embodiment. FIG. 2 is a perspective view illustrating examples of a housing and a latent heat storage part in the first embodiment. FIG. 3 is a top view illustrating the examples of the housing and the latent heat storage part in the first embodiment. FIG. 4 is a perspective view illustrating the example of the housing in the first embodiment. FIG. 5 is a top view illustrating the example of the housing in the first embodiment. FIG. 6 is a cross sectional view illustrating the example of the heat storage device according to the first embodiment. FIG. 6 corresponds to a cross sectional view taken along a line VI-VI in FIG. 1 and FIG. 5.

As illustrated in FIG. 1 through FIG. 6, a heat storage device 1 according to the first embodiment includes a heat insulated container 10, and a latent heat storage member 70 having a plate shape. The heat storage device 1 may include a plurality of latent heat storage members 70.

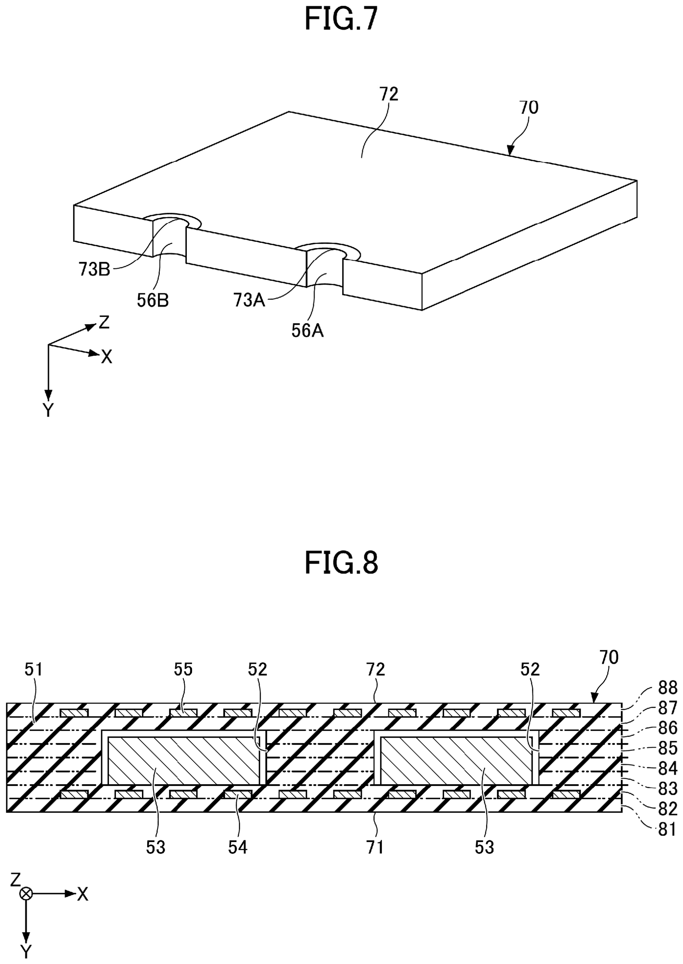

The latent heat storage member 70 will be described. FIG. 7 is a perspective view illustrating an example of the latent heat storage member 70. FIG. 8 is a cross sectional view illustrating the example of the latent heat storage member 70.

The latent heat storage member 70 has a first principal surface 71, and a second principal surface 72 opposite to the first principal surface 71, as illustrated in FIG. 3. The first principal surface 71 and the second principal surface 72 are perpendicular to the Y axis. The latent heat storage member 70 has a substantially rectangular planar shape in a plan view perpendicular to the first principal surface 71. The latent heat storage member 70 has a flat plate shape. The latent heat storage member 70 further has two surfaces perpendicular to the X axis and two surfaces perpendicular to the Z axis. The dimension in the X axis direction and the dimension in the Z axis direction are two times or more, preferably three times or more, and more preferably five times or more the dimension (thickness) of the latent heat storage member 70 in the Y axis direction.

The latent heat storage member 70 includes a ceramic part 51, a latent heat storage part (or latent heat storage material) 53, a heating element 54, a heating element 55, an external terminal 56A, and an external terminal 56B. A plurality of closed spaces 52 is formed inside the ceramic part 51. The ceramic part 51 is integrally formed and is monolithic, for example. For example, the ceramic part 51 does not have a bonding portion in the closed space 52, bonding two ceramic pieces with opposing cavities, for example. In the present specification, "does not have a bonding portion" refers to a state where there is no discontinuity in both composition and microstructure, that is, the composition is not discontinuous (no bonding material is used to bond two different compositions) and the microstructure is not discontinuous (no later introduced portion of the same kind of material is present). The ceramic part 51 is formed by firing eight green sheets 81, 82, 83, 84, 85, 86, 87, and 88 that are sequentially stacked, for example. The closed spaces 52 are formed by connecting openings formed in the green sheets 83, 84, 85, and 86.

The latent heat storage part 53 is provided inside the closed space 52. In other words, the latent heat storage part 53 is sealed inside the ceramic part 51. That is, the latent heat storage part 53 is hermetically covered with or enclosed by the ceramic part 51 that constitutes a continuous body. The ceramic part 51 has a function of preventing leakage of the melted latent heat storage part 53. The latent heat storage part 53 has an approximately rectangular parallelepiped shape, for example. The latent heat storage part 53 is provided inside each of the closed spaces 52. That is, the latent heat storage part 53 is provided at a plurality of locations inside the ceramic part 51. A gap is present between the latent heat storage part 53 and a portion of an inner wall surface of the closed space 52.

The latent heat storage part 53 is made of a metal, for example. The latent heat storage part 53 includes aluminum (Al), copper (Cu), silicon (Si), boron (B), or an arbitrary combination thereof, for example. A melting point of the latent heat storage part 53 is 200°C or higher, for example.

A main component of the latent heat storage part 53 may be aluminum. The latent heat storage part 53 may include aluminum in a proportion of 99 mass% or higher. That is, the latent heat storage part 53 may be made of aluminum having a purity of 99 mass% or higher. In the present disclosure, the main component refers to a component having a highest content ratio.

The main component of the latent heat storage part 53 may be copper. The latent heat storage part 53 may include copper in a proportion of 99 mass% or higher. That is, the latent heat storage part 53 may be made of copper having a purity of 99 mass% or higher.

The main component of the latent heat storage part 53 may be silicon. The latent heat storage part 53 may include silicon in a proportion of 50 mass% or higher. That is, the latent heat storage part 53 may be made of silicon having a purity of 50 mass% or higher. Preferably, the latent heat storage part 53 includes 99 mass% or higher of silicon and is constituted by 99 mass% or higher of silicon. When the latent heat storage part 53 includes silicon in a proportion of 50 mass% or higher, boron (B), aluminum (Al), bismuth (Bi), antimony (Sb), gallium (Ga), copper (Cu), iron (Fe), titanium (Ti), yttrium (Y), indium (In), zinc (Zn), tin (Sn), or an arbitrary combination thereof may be included in a proportion of less than 50 mass% in total.

The main component of the latent heat storage part 53 may be boron. The latent heat storage part 53 may include boron in a proportion of 50 mass% or higher. The latent heat storage part 53 may be made of boron having a purity of 50 mass% or higher. Preferably, the latent heat storage part 53 includes 80 mass% or higher of boron and is constituted by 80 mass% or higher of boron. More preferably, the latent heat storage part 53 includes 99 mass% or higher of boron and is constituted by 99 mass% or higher of boron. When the latent heat storage part 53 includes boron in a proportion of 80 mass% or higher, silicon (Si), aluminum (Al), iron (Fe), copper (Cu), cobalt (Co), or an arbitrary combination thereof may be included in a proportion of less than 20 mass% in total.

In a case where the main component of the latent heat storage part 53 is aluminum, the ceramic part 51 includes aluminum oxide (Al₂O₃) in a proportion of 96 mass% or higher, for example. That is, the ceramic part 51 may be made of aluminum oxide having a purity of 96 mass% or higher.

In a case where the main component of the latent heat storage part 53 is copper, the ceramic part 51 includes aluminum oxide in a proportion of 90 mass% or higher, or mullite (3Al₂O₃·2SiO₂) in a proportion of 90 mass% or higher, or aluminum nitride (AlN) in a proportion of 95 mass% or higher, or a mixture of aluminum nitride and boron nitride (BN) in a proportion of 95 mass% or higher, for example. The ceramic part 51 may further include a component of a sintering aid or the like. Examples of the component of the sintering aid include silicon, magnesium, calcium, or the like. A grain size of ceramic grains included in the ceramic part 51 is preferably 1 µm or less, and more preferably 0.3 µm or less, for example.

In a case where the main component of the latent heat storage part 53 is silicon, the ceramic part 51 includes mullite, aluminum oxide (Al₂O₃), cordierite (2MgO·2Al₂O₃·5SiO₂), anorthite (CaAl₂Si₂O₈), sillimanite (Al₂SiO₅), silicon nitride (Si₃N₄), boron nitride, aluminum nitride, a composite material (composite ceramic) of aluminum nitride and boron nitride, silicon carbide (SiC), tungsten carbide (WC), boron carbide (B₄C), molybdenum disilicide (MoSi₂), tungsten disilicide (WSi₂), or an arbitrary combination thereof, for example. The ceramic part 51 may be made of mullite, aluminum oxide, cordierite, anorthite, sillimanite, silicon nitride, boron nitride, aluminum nitride, a composite material of aluminum nitride and boron nitride, silicon carbide, tungsten carbide, boron carbide, molybdenum disilicide, tungsten disilicide, or an arbitrary combination thereof.

In a case where the main component of the latent heat storage part 53 is boron, the ceramic part 51 may include boron nitride (BN), boron carbide (B₄C), aluminum nitride (AlN), a composite material of aluminum nitride and boron nitride, silicon nitride (Si₃N₄), silicon carbide (SiC), or an arbitrary combination thereof. The ceramic part 51 may be made of boron nitride, boron carbide, aluminum nitride, a composite material (composite ceramic) of aluminum nitride and boron nitride, silicon nitride, silicon carbide, or an arbitrary combination thereof.

In a case where the main component of the latent heat storage part 53 is boron, the ceramic part 51 may include boride. The ceramic part 51 may be made of boride. The boride includes titanium boride (TiB₂), zirconium boride (ZrB₂), hafnium boride (HfB₂), vanadium boride (VB₂), niobium boride (NbB₂), tantalum boride (TaB₂), lanthanum boride (LaB₆), or an arbitrary combination thereof, for example.

The heating elements 54 and 55 are provided inside the ceramic part 51. The heating element 54 is provided between the first principal surface 71 and the latent heat storage part 53. The heating element 55 is provided between the second principal surface 72 and the latent heat storage part 53. The heating elements 54 and 55 have a meander geometry that meanders in the ZX plane. The heating elements 54 and 55 generate Joule heat when energized. The heating elements 54 and 55 can heat the latent heat storage part 53. In order to reduce heat loss, it is preferable that a distance between the latent heat storage part 53 and each of the heating elements 54 and 55 is small. The heating elements 54 and 55 include tungsten, or molybdenum, or both tungsten and molybdenum, for example. The heating elements 54 and 55 may include a mixture of tungsten and aluminum oxide or a mixture of molybdenum and aluminum oxide. In this case, the heating elements 54 and 55 may further include one or more materials selected from silicon oxide, magnesium oxide, calcium carbonate, or the like. The heating elements 54 and 55 are formed by firing a conductive paste, simultaneously with the firing of the green sheets 81, 82, 83, 84, 85, 86, 87, and 88, for example. For example, the heating element 54 is formed by firing a conductive paste coated on a surface of the green sheet 81 on the side closer to the green sheet 82, and the heating element 55 is formed by firing a conductive paste coated on a surface of the green sheet 87 on the side closer to the green sheet 88. The heating elements 54 and 55 are examples of a heater.

A semi-circular recess 73A and a semi-circular recess 73B that are recessed toward the +Z side are formed in a surface of the ceramic part 51 on the -Z side. The external terminal 56A is provided on a wall surface of the recess 73A, and the external terminal 56B is provided on a wall surface of the recess 73B. The external terminals 56A and 56B are copper (Cu) layers, for example. One end of the heating element 54 and one end of the heating element 55 are connected to the external terminal 56A, and the other end of the heating element 54 and the other end of the heating element 55 are connected to the external terminal 56B.

The insulated container 10 includes a housing 16 formed with an opening 15, and a lid 17 that closes the opening 15. A space 13 is formed inside the insulated container 10, and the plurality of latent heat storage member 70 is located within the space 13. The insulated container 10 further includes a first vent 11 and a second vent 12 that communicate with the space 13.

The housing 16 includes a bottom plate 61, a side plate 62, a side plate 63, a side plate 64, and a side plate 65.

The bottom plate 61 has a rectangular planar shape having two sides parallel to the X axis and two sides parallel to the Y axis in a plan view parallel to the Z axis. The bottom plate 61 has a first surface 21 perpendicular to the Z axis on the +Z side of the bottom plate 61.

The side plate 62 has a rectangular planar shape having two sides parallel to the Y axis and two sides parallel to the Z axis in a plan view parallel to the X axis. The side plate 62 has a second surface 22 perpendicular to the X axis on the -X side of the side plate 62. The second surface 22 is continuous with the first surface 21.

The side plate 63 has a rectangular planar shape having two sides parallel to the Z axis and two sides parallel to the X axis in a plan view parallel to the Y axis. The side plate 63 has a third surface 23 perpendicular to the Y axis on the -Y side of the side plate 63. The third surface 23 is continuous with the first surface 21 and the second surface 22.

The side plate 64 has a rectangular planar shape having two sides parallel to the Y axis and two sides parallel to the Z axis in the plan view parallel to the X axis. The side plate 64 has a fourth surface 24 perpendicular to the X axis on the +X side of the side plate 64. The fourth surface 24 is continuous with the first surface 21 and the third surface 23.

The side plate 65 has a rectangular planar shape having two sides parallel to the Z axis and two sides parallel to the X axis in the plan view parallel to the Y axis. The side plate 65 has a fifth surface 25 perpendicular to the Y axis on the +Y side of the side plate 65. The fifth surface 25 is continuous with the first surface 21, the second surface 22, and the fourth surface 24.

The lid 17 has a rectangular planar shape having two sides parallel to the X axis and two sides parallel to the Y axis in the plan view parallel to the Z axis. The lid 17 has a sixth surface 26 perpendicular to the Z axis on the -Z side of the lid 17. The sixth surface 26 is continuous with the second surface 22, the third surface 23, the fourth surface 24, and the fifth surface 25.

The first surface 21, the second surface 22, the third surface 23, the fourth surface 24, the fifth surface 25, and the sixth surface 26 constitute wall surfaces of the space 13. The Z axis is an example of a first axis, the X axis is an example of a second axis, and the Y axis is an example of a third axis.

The insulated container 10 has a plurality of protrusions 31A, 31B, and 31C protruding from the second surface 22 toward the fourth surface 24. The plurality of protrusions 31A are arranged at regular intervals along the Y axis between the third surface 23 and the fifth surface 25. The plurality of protrusions 31A is provided at an end portion of the side plate 62 on the +Z side. The plurality of protrusions 31B are arranged at the same intervals as the plurality of protrusions 31A along the Y axis between the third surface 23 and the fifth surface 25. The plurality of protrusions 31B is provided between the end portion on the +Z side and an end portion on the -Z side of the side plate 62, near a center of the end portions on the +Z side and the -Z side of the side plate 62, for example. The plurality of protrusions 31C are arranged at the same intervals as the plurality of protrusions 31A along the Y axis between the third surface 23 and the fifth surface 25. The plurality of protrusions 31C is provided at the end portion of the side plate 62 on the -Z side. The protrusions 31A, 31B, and 31C are examples of a first protrusion.

The insulated container 10 has a plurality of protrusions 32A, 32B, and 32C protruding from the fourth surface 24 toward the second surface 22. The plurality of protrusions 32A are arranged at regular intervals along the Y axis between the third surface 23 and the fifth surface 25. The plurality of protrusions 32A is provided at an end portion of the side plate 64 on the +Z side of the side plate 64. The plurality of protrusions 32B are arranged at the same intervals as the plurality of protrusions 32A along the Y axis between the third surface 23 and the fifth surface 25. The plurality of protrusions 32B is provided between the end portion on the +Z side and an end portion on the -Z side of the side plate 64, near a center between the end portion on the +Z side and the end portion on the -Z side of the side plate 64, for example. The plurality of protrusions 32C are arranged at the same intervals as the plurality of protrusions 32A along the Y axis between the third surface 23 and the fifth surface 25. The plurality of protrusions 32C is provided at an end portion of the side plate 64 on the -Z side of the side plate 64. The protrusions 32A, 32B, and 32C are examples of a second protrusion.

As illustrated in FIG. 6, the protrusions 31A, 31B, and 31C are arranged along the Z axis. A slit 36 is formed between the protrusion 31A and the protrusion 31B of the side plate 62, and a slit 36 is formed between the protrusion 31B and the protrusion 31C of the side plate 62. The first vent 11 communicates with the space 13 through the slits 36. The slits 36 are examples of a first through hole.

As illustrated in FIG. 6, the protrusions 32A, 32B, and 32C are arranged along the Z axis. A slit 37 is formed between the protrusion 32A and the protrusion 32B of the side plate 64, and a slit 37 is formed between the protrusion 32B and the protrusion 32C of the side plate 64. The second vent 12 communicates with the space 13 through the slits 37. The slits 37 are examples of a second through hole.

The plurality of latent heat storage members 70 is disposed between two adjacent protrusions 31A, between two adjacent protrusions 31B, between two adjacent protrusions 31C, between two adjacent protrusions 32A, between two adjacent protrusions 32B, and between two adjacent protrusions 32C along the Y axis, respectively. The protrusions 31A, 31B, 31C, 32A, 32B, and 32C support the plurality of latent heat storage members 70 and enable a heat transfer medium, such as air or the like, to flow between the first vent 11 and the second vent 12. The protrusions 31A, 31B, 31C, 32A, 32B, and 32C are examples of a support member.

The insulated container 10 has electrodes 19A and 19B on the first surface 21 of the bottom plate 61. The electrodes 19A and 19B extend along the Y axis. The external terminals 56A of the latent heat storage members 70 are electrically connected to the electrode 19A, and the external terminals 56B of the latent heat storage members 70 are electrically connected to the electrode 19B.

In a case where heat is stored in the heat storage device 1, the heat transfer medium, such as air or the like, having a temperature higher than the melting point of the latent heat storage part 53 is supplied from one of the first vent 11 and the second vent 12 into the space 13 and is discharged from the other of the first vent 11 and the second vent 12. During this process, the heat transfer medium comes into contact with the latent heat storage members 70, and the heat of the heat transfer medium is transferred to the latent heat storage part 53 via the ceramic part 51. When the latent heat storage part 53 is heated to a temperature higher than a solid-liquid phase change temperature, latent heat associated with the phase change is stored in the latent heat storage part 53. After the latent heat is stored in the latent heat storage part 53, the first vent 11 and the second vent 12 are closed.

In addition, in a case where the heat stored in the heat storage device 1 is utilized, the first vent 11 and the second vent 12 are opened, and the heat transfer medium, such as air or the like, having a temperature lower than the melting point of the latent heat storage part 53 is supplied from one of the first vent 11 and the second vent 12 into the space 13 and discharged from the other of the first vent 11 and the second vent 12. During this process, the heat transfer medium comes into contact with the latent heat storage members 70, and the latent heat storage part 53 is cooled via the ceramic part 51. When the latent heat storage part 53 is cooled to a temperature lower than the solid-liquid phase change temperature, the latent heat associated with the phase change is transmitted to the heat transfer medium.

In the present embodiment, the protrusions 31A, 31B, 31C, 32A, 32B, and 32C support the plate shaped latent heat storage members 70 as support members and enable the heat transfer medium to flow between the first vent 11 and the second vent 12. For this reason, an occupancy ratio of the latent heat storage members 70 within the space 13 (a ratio of a total volume of the latent heat storage members 70 with respect to a volume of the space 13) can be increased. The occupancy ratio of the latent heat storage members 70 within the space 13 can be adjusted by the dimensions of the latent heat storage members 70, and the dimensions, number, intervals, or the like of the protrusions 31A, 31B, 31C, 32A, 32B, and 32C, for example. The occupancy ratio of the latent heat storage members 70 within the space 13 may be 70% or higher, 80% or higher, or 90% or higher, for example. An energy density of the heat storage device 1 can be improved by improving the occupancy ratio of the latent heat storage members 70 within the space 13. In contrast, an occupancy ratio of a heat storage device having a container filled with a spherical latent heat storage member having a diameter of several millimeters is less than 70%.

Further, because the plurality of latent heat storage members 70 is arranged at regular intervals, the heat transfer medium and the latent heat storage members 70 are likely to come into contact with each other, and a high heat transfer performance can be achieved between the latent heat storage part 53 and the heat transfer medium.

For the heat storage, not only the heat transfer medium but also electric power may be used. In this case, the electric power is supplied from the electrodes 19A and 19B to the heating elements 54 and 55 via the external terminals 56A and 56B, and the heating elements 54 and 55 are energized to generate heat. The heat generated by the heating elements 54 and 55 is stored in the latent heat storage part 53. Accordingly, the electric power applied from the outside can be converted into heat and stored in the latent heat storage part 53. For example, when surplus electric power is used to generate heat from the heating elements 54 and 55, the surplus electric power can be stored as heat. Energy stored in the latent heat storage part 53 can be supplied to a factory, an office, a commercial building, or the like as energy of heat, steam (pressure), or electric power (turbine power generation by steam pressure, or the like).

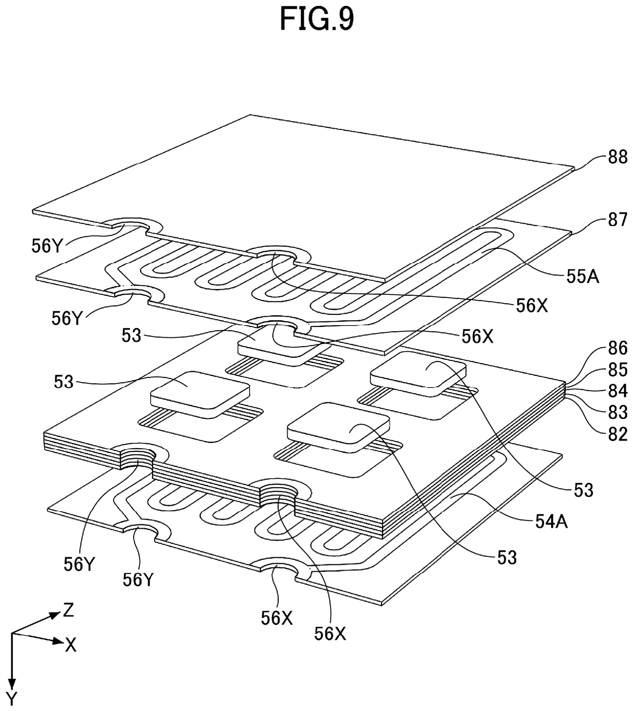

Next, a method for manufacturing the latent heat storage member 70 will be described. FIG. 9 is a perspective view illustrating an example of the method for manufacturing the latent heat storage member 70.

First, the eight green sheets 81, 82, 83, 84, 85, 86, 87, and 88 are prepared. Openings that become the closed spaces 52 are formed in the green sheets 83, 84, 85, and 86. Four openings are formed in each of the green sheets 83, 84, 85, and 86, for example. Further, a recess that becomes the recess 73A and a recess that becomes the recess 73B are formed in each of the green sheets 81, 82, 83, 84, 85, 86, 87, and 88. Further, a conductive paste 54A that becomes the heating element 54 is coated on the surface of the green sheet 81 on the side closer to the green sheet 82, and a conductive paste 55A that becomes the heating element 55 is coated on the surface of the green sheet 87 on the side closer to the green sheet 88. The latent heat storage part 53 is prepared in a solid or monolithic bulk form.

Next, the green sheets 81, 82, 83, 84, 85, 86, 87, and 88 are stacked while the latent heat storage part 53 is accommodated in the openings of the green sheets 83, 84, 85, and 86. Further, a conductive paste 56X that becomes the external terminal 56A is coated on a recess that becomes a recess 73A, a conductive paste 56Y that becomes the external terminal 56B is coated on a recess that becomes a recess 73B, and the green sheets 81, 82, 83, 84, 85, 86, 87, and 88 and the conductive pastes 54A, 55A, 56X, and 56Y are fired simultaneously.

The latent heat storage member 70 can be manufactured in the manner described above.

As described above, the latent heat storage member 70 can easily be manufactured with a higher dimensional accuracy than the spherical latent heat storage member, by simultaneously firing the green sheets and the conductive pastes. The firing technique for the green sheets and the conductive pastes is popularly used to manufacture semiconductor package products or the like, and thus, the latent heat storage member 70 is suited for mass production.

A groove may be formed in at least one of the first principal surface 71 or the second principal surface 72 of the latent heat storage member 70. In this case, a surface area of the latent heat storage member 70 that comes into contact with the heat transfer medium can be increased, and the heat transfer performance can easily be improved. The groove preferably extends along the X axis because this arrangement can facilitate circulation of the heat transfer medium. At least one of the first principal surface 71 or the second principal surface 72 of the latent heat storage member 70 may be subjected to a surface roughening treatment, such as a blasting treatment or the like. In this case, the surface area of the latent heat storage member 70 that comes into contact with the heat transfer medium can be increased due to the rough surface, and the heat transfer performance can easily be improved.

The melting point of the latent heat storage part 53 may differ among the plurality of latent heat storage members 70. For example, the melting point of the latent heat storage part 53 may be lower in the latent heat storage member 70 closer to the third surface 23 or the fifth surface 25 among the plurality of latent heat storage members 70. The latent heat storage member 70 is accommodated inside the insulated container 10, but may be inevitably affected by an external temperature. While heat is stored in the heat storage device 1, the temperature of the latent heat storage member 70 closer to the third surface 23 or the fifth surface 25 is more likely to decrease due to the influence of the external temperature, but is unlikely to undergo a phase change from a solid phase to a liquid phase due to the lower melting point.

### <Second Embodiment>

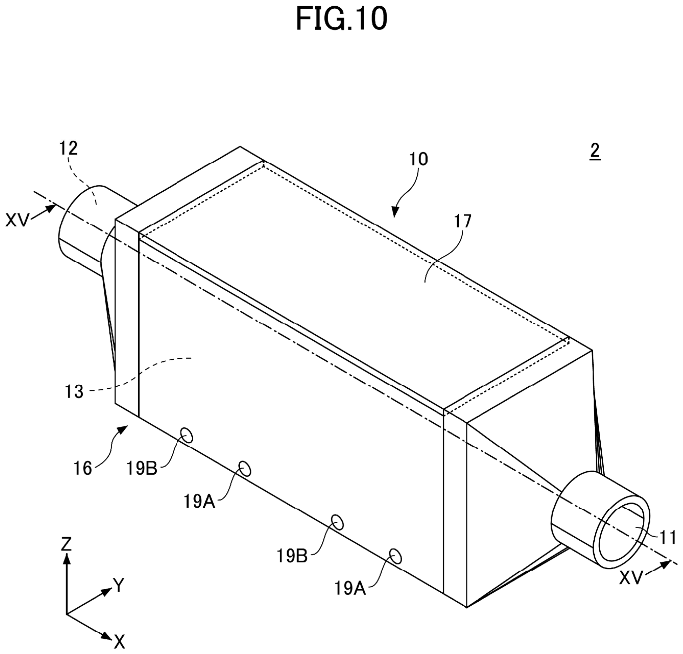

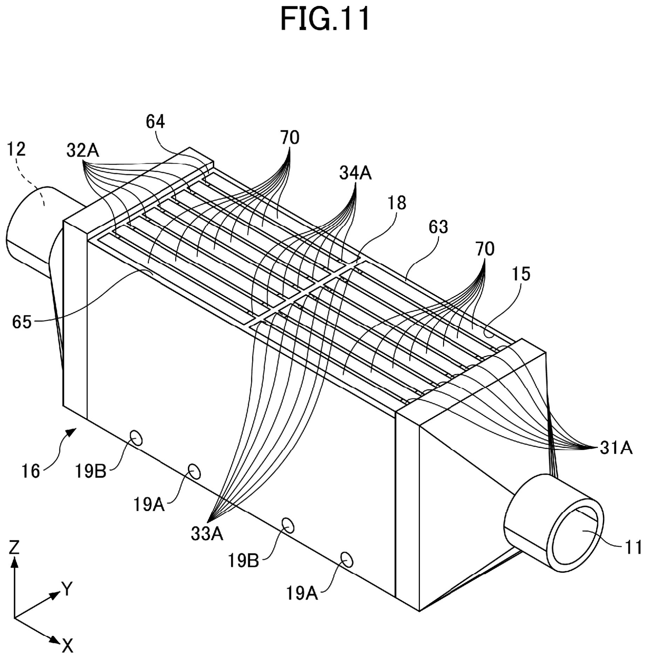

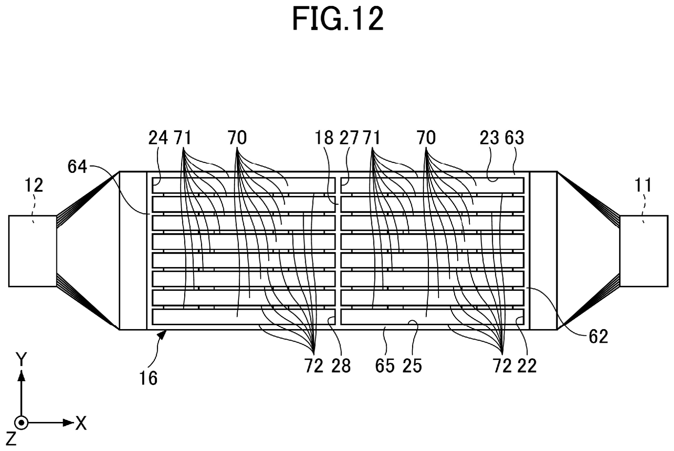

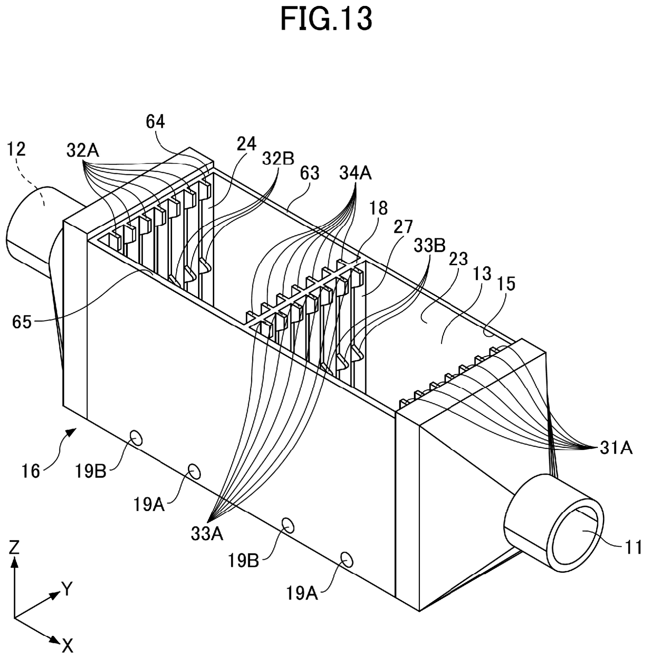

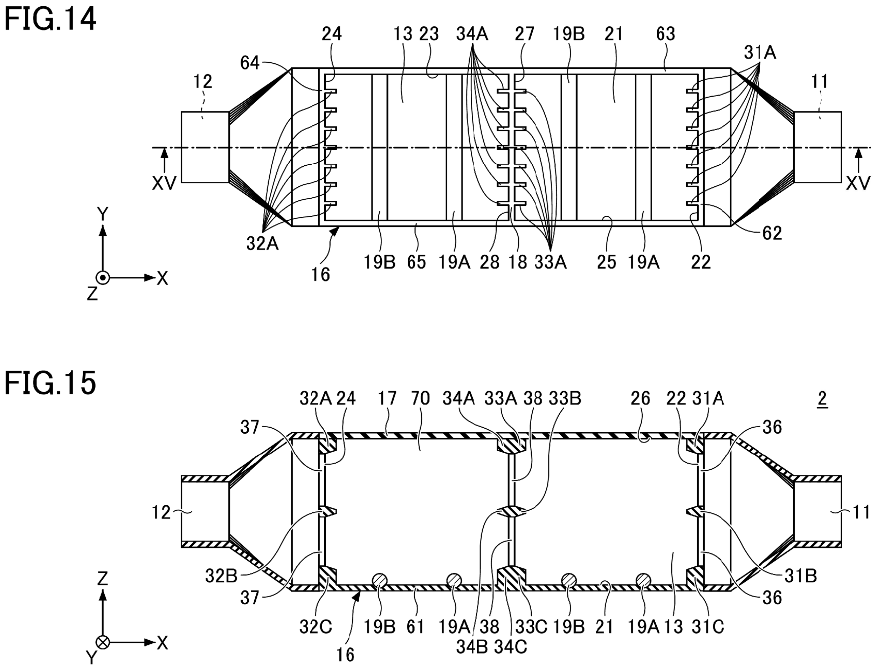

A second embodiment will be described. The second embodiment differs from the first embodiment mainly in the dimension of the space 13 of the insulated container 10 in the X axis direction and also in that the space 13 is partitioned into a plurality of sections. FIG. 10 is a perspective view illustrating an example of the heat storage device according to the second embodiment. FIG. 11 is a perspective view illustrating examples of the housing and the latent heat storage part in the second embodiment. FIG. 12 is a top view illustrating the examples of the housing and the latent heat storage part in the second embodiment. FIG. 13 is a perspective view illustrating the example of the housing in the second embodiment. FIG. 14 is a top view illustrating the example of the housing in the second embodiment. FIG. 15 is a cross sectional view illustrating the example of the heat storage device according to the second embodiment. FIG. 15 corresponds to a cross sectional view taken along a line XV-XV in FIG. 10 and FIG. 14.

As illustrated in FIG. 10 through FIG. 15, in a heat storage device 2 according to the second embodiment, the dimension of the space 13 of the insulated container 10 in the X axis direction is approximately twice the dimension in the heat storage device 1. The insulated container 10 has a plate 18 between the second surface 22 and the fourth surface 24. The plate 18 has a seventh surface 27 facing the second surface 22, and an eighth surface 28 facing the fourth surface 24. The plate 18 is connected to the side plates 63 and 65. The seventh surface 27 and the eighth surface 28 are continuous with the first surface 21, the third surface 23, the fifth surface 25, and the sixth surface 26.

The insulated container 10 has a plurality of protrusions 33A, 33B, and 33C protruding from the seventh surface 27 toward the second surface 22. The plurality of protrusions 33A are arranged at regular intervals along the Y axis between the third surface 23 and the fifth surface 25. The plurality of protrusions 33A is provided at an end portion of the plate 18 on the +Z side. The plurality of protrusions 33B is arranged at the same intervals as the plurality of protrusions 33A along the Y axis between the third surface 23 and the fifth surface 25. The plurality of protrusions 33B is provided between the end portion of the plate 18 on the +Z side and an end portion of the plate 18 on the -Z side, for example, near a center between the end portions of the plate 18 on the +Z side and the -Z side. The plurality of protrusions 33C is arranged at the same intervals as the plurality of protrusions 33A along the Y axis between the third surface 23 and the fifth surface 25. The plurality of protrusions 33C is provided on an end of the plate 18 on the -Z side. The protrusions 33A, 33B, and 33C are examples of a third protrusion.

The insulated container 10 has a plurality of protrusions 34A, 34B and 34C protruding from the eighth surface 28 toward the fourth surface 24. The plurality of protrusions 34A is arranged at regular intervals along the Y axis between the third surface 23 and the fifth surface 25. The plurality of protrusions 34A is provided at the end portion of the plate 18 on the +Z side. The plurality of protrusions 34B is arranged at the same intervals as the plurality of protrusions 34A along the Y axis between the third surface 23 and the fifth surface 25. The plurality of protrusions 34B is provided between the end portion of the plate 18 on the +Z side and the end portion of the plate on the -Z side, for example, near the center between the end portions of the plate 18 on the +Z side and the -Z side. The plurality of protrusions 34C are arranged at the same intervals as the plurality of protrusions 34A along the Y axis between the third surface 23 and the fifth surface 25. The plurality of protrusions 34C is provided at the end portion of the plate 18 on the -Z side. The protrusions 34A, 34B, and 34C are examples of a fourth protrusion.

As illustrated in FIG. 15, the protrusions 33A, 33B, and 33C are arranged along the Z axis. The protrusions 34A, 34B, and 34C are arranged along the Z axis. The protrusions 33A and the protrusions 34A are provided at the same positions in the Y axis direction and the Z axis direction. The protrusions 33B and the protrusions 34B are provided at the same positions in the Y axis direction and the Z axis direction. The protrusions 33C and the protrusions 34C are provided at the same positions in the Y axis direction and the Z axis direction. A slit 38 is formed between the protrusions 33A and 34A and the protrusions 33B and 34B of the plate 18, and a slit 38 is formed between the protrusions 33B and 34B and the protrusions 33C and 34C of the plate 18. The slit 38 reaches the seventh surface 27 and the eighth surface 28. A portion of the space 13 on the +X side of the plate 18 and a portion of the space 13 on the -X side of the plate 18 communicate with each other through the slit 38. The slit 38 is an example of a third through hole.

Some of the latent heat storage members 70 are disposed between two adjacent protrusions 31A, between two adjacent protrusions 31B, between two adjacent protrusions 31C, between two adjacent protrusions 33A, between two adjacent protrusions 33B, and between two adjacent protrusions 33C along the Y axis. The protrusions 31A, 31B, 31C, 33A, 33B, and 33C support these latent heat storage members 70 and enable the heat transfer medium, such as air or the like, to flow between the first vent 11 and the second vent 12. Other the latent heat storage members 70 are disposed between two adjacent protrusions 32A, between two adjacent protrusions 32B, between two adjacent protrusions 32C, between two adjacent protrusions 34A, between two adjacent protrusions 34B, and between two adjacent protrusions 34C along the Y axis. The protrusions 32A, 32B, 32C, 34A, 34B, and 34C support these other latent heat storage members 70 and enable the heat transfer medium, such as air or the like, to flow between the first vent 11 and the second vent 12. The protrusions 33A, 33B, 33C, 34A, 34B, and 34C are examples of a support member.

The insulated container 10 has two pairs of electrodes 19A and 19B on the first surface 21 of the bottom plate 61. One pair of electrodes 19A and 19B is provided between the second surface 22 and the seventh surface 27, and the other pair of electrodes 19A and 19B is provided between the fourth surface 24 and the eighth surface 28.

Otherwise, the configuration of the heat storage device 2 according to the second embodiment is the same as that of the heat storage device 1 according to the first embodiment.

The second embodiment can also provide the same effects as those of the first embodiment. In addition, a larger number of latent heat storage members 70 can be accommodated inside the insulated container 10, and thus, a larger amount of heat can be stored.

The melting point of the latent heat storage part 53 of the latent heat storage member 70 (an example of a first latent heat storage member) disposed between the second surface 22 and the seventh surface 27 may be different from the melting point of the latent heat storage part 53 of the latent heat storage member 70 (an example of a second latent heat storage member) disposed between the fourth surface 24 and the eighth surface 28. In this case, during heat storage, the heat transfer medium is caused to flow from the latent heat storage member 70 including the latent heat storage part 53 having a high melting point to the latent heat storage member 70 including the latent heat storage part 53 having a low melting point. Accordingly, even when the temperature of the heat transfer medium is decreases due to the storage of the latent heat in the latent heat storage part 53 having the high melting point, the latent heat can be stored in the latent heat storage part 53 having the low melting point. During heat dissipation, the heat transfer medium is caused to flow from the latent heat storage member 70 including the latent heat storage part 53 having the low melting point to the latent heat storage member 70 including the latent heat storage part 53 having the high melting point. In this case, it is possible to raise the temperature of the heat transfer medium in a stepwise manner.

In the second embodiment, the insulated container 10 has a single plate 18 between the second surface 22 and the fourth surface 24. However, a plurality of plates 18 may be provided between the second surface 22 and the fourth surface 24. In this case, it is also preferable that the melting point of the latent heat storage part 53 of the latent heat storage member 70 varies stepwise among the plurality of latent heat storage members 70 between the first vent 11 and the second vent 12.

According to the disclosed technique, it is possible to improve the energy density of the heat storage device.

Although the embodiments are numbered with, for example, "first," or "second," the ordinal numbers do not imply priorities of the embodiments. Many other variations and modifications will be apparent to those skilled in the art.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A heat storage device (1, 2) comprising:
an insulated container (10); and
one or more latent heat storage members (70) having a plate shape and accommodated inside the insulated container (10), wherein:
each latent heat storage member (70) of the one or more latent heat storage members (70) includes:
a ceramic part (51) having a closed space (52) formed therein; and
a latent heat storage part (53) provided inside the closed space (52), and
the insulated container (10) includes:
a space (13) in which the one or more latent heat storage members (70) is located;
a first vent (11) and a second vent (129 communicating with the space (13); and
a support member (31A-31C, 32A-32C, 33A-33C, 34A-34C) configured to support the one or more latent heat storage members (70) and enable a heat transfer medium to flow between the first vent (11) and the second vent (12).

2. The heat storage device (1, 2) as claimed in claim 1, wherein:
the insulated container (10) includes:
a housing (16) having an opening (15); and
a lid (17) configured to close the opening (15),
the housing (16) includes:
a first surface (21) perpendicular to a first axis;
a second surface (22), perpendicular to a second axis that is perpendicular to the first axis, and continuous with the first surface (21);
a third surface (23), perpendicular to a third axis that is perpendicular to the first axis and the second axis, and continuous with the first surface (21) and the second surface (22);
a fourth surface (24), perpendicular to the second axis, and continuous with the first surface (21) and the third surface (23); and
a fifth surface (25), perpendicular to the third axis, and continuous with the first surface (21), the second surface (22), and the fourth surface (24),
the lid (17) has a sixth surface (26), perpendicular to the first axis, and continuous with the second surface (22), the third surface (23), the fourth surface (24), and the fifth surface (25),
the first vent (11) communicates with the space (13) through a first through hole (36) provided in the second surface (22),
the second vent (12) communicates with the space (13) through a second through hole (37) provided in the fourth surface (24),
the support member (31A-31C, 32A-32C, 33A-33C, 34A-34C) includes:
a plurality of first protrusions (31A-31C) protruding from the second surface (22) toward the fourth surface (24) and arranged along the third axis; and
a plurality of second protrusions (32A-32C) protruding from the fourth surface (24) toward the second surface (22) and arranged along the third axis, and
each latent heat storage member (70) of the one or more latent heat storage members (70) includes:
a first principal surface (71) facing the third surface (23); and
a second principal surface (72) facing the fifth surface (25).

3. The heat storage device (1, 2) as claimed in claim 2, wherein at least one of the first principal surface (71) or the second principal surface (72) is formed with a groove.

4. The heat storage device (1, 2) as claimed in claim 2, wherein at least one of the first principal surface (71) or the second principal surface (72) is a rough surface.

5. The heat storage device (1, 2) as claimed in any one of claims 2 to 4, wherein each latent heat storage member (70) of the one or more latent heat storage members (70) is disposed between two adjacent first protrusions (31A-31C) of the plurality of first protrusions (31A-31C) along the third axis and between two adjacent second protrusions (32A-32C) of the plurality of second protrusions (32A-32C) along the third axis.

6. The heat storage device (2) as claimed in any one of claims 2 to 4, wherein:
the insulated container (10) includes a plate (18) between the second surface (22) and the fourth surface (24),
the plate (18) includes a seventh surface (27) facing the second surface (22), and an eighth surface (28) facing the fourth surface (24),
one or more first latent heat storage members (70), which are a part of two or more latent heat storage members (70), disposed between the second surface (22) and the seventh surface (27),
one or more second latent heat storage members (70), which are another part of the two or more latent heat storage members (70), disposed between the fourth surface (24) and the eighth surface (28), and
the plate (18) has a third through hole (38) reaching the seventh surface (27) and the eighth surface (28).

7. The heat storage device (2) as claimed in claim 6, wherein:
the support member (31A-31C, 32A-32C, 33A-33C, 34A-34C) includes:
a plurality of third protrusions (33A-33C) protruding from the seventh surface (27) toward the second surface (22) and arranged along the third axis; and
a plurality of fourth protrusions (34A-34C) protruding from the eighth surface (28) toward the fourth surface (24) and arranged along the third axis,
each first latent heat storage member (70) of the one or more first latent heat storage members (70) is disposed between two adjacent first protrusions (31A-31C) of the plurality of first protrusions (31A-31C) along the third axis and between two adjacent third protrusions (33A-33C) of the plurality of third protrusions (33A-33C along the third axis, and
each second latent heat storage member (70) of the one or more second latent heat storage members (70) is disposed between two adjacent second protrusions (32A-32C) of the plurality of second protrusions (32A-32C) along the third axis and between two adjacent fourth protrusions (34A-34C) of the plurality of fourth protrusions (34A-33C) along the third axis.

8. The heat storage device (2) as claimed in claim 7, wherein a melting point of the latent heat storage part (53) of the one or more first latent heat storage members (70) is different from a melting point of the latent heat storage part (53) of the one or more second latent heat storage members (70).

9. The heat storage device (1, 2) as claimed in any one of claims 2 to 4, wherein the melting point of the latent heat storage part (53) is lower for a latent heat storage member (70) closer to the third surface (23) or the fifth surface (25) among two or more latent heat storage members (70) of the one or more latent heat storage members (70).

10. The heat storage device (1, 2) as claimed in any one of claims 1 to 4, wherein:
each latent heat storage member (70) of the one or more latent heat storage members (70) includes:
a heater (54, 55) configured to heat the latent heat storage part (70); and
an external terminal (56A, 56B) coupled to the heater (54, 55), and
the insulated container (10) includes an electrode (19A, 19B) electrically connected to the external terminal (56A, 56B).
